# EUROPÄISCHE PATENTSCHRIFT

(11) **EP 0 415 394 B1**
(45) Veröffentlichungstag und Bekanntmachung des Hinweises auf die Patenterteilung: **26.05.1993**
(21) Anmeldenummer: 90116585.2
(22) Anmeldetag: 29.08.1990
(51) Int. Cl.: F16B 12/50

(54) **Eckverbinder für Tür- oder Fensterrahmen**
Corner link for door- or windowframes
Joint d'angle pour chassis de porte ou de fenêtre

(30) Priorität: 31.08.1989 DE 8910401 U
(43) Veröffentlichungstag der Anmeldung: 06.03.1991
(73) Patentinhaber: Grotefeld, Hans Dieter, D-32549 Bad Oeynhausen (DE)
(72) Erfinder: Grotefeld, Hans Dieter, D-32549 Bad Oeynhausen (DE)
(74) Vertreter: TER MEER STEINMEISTER & PARTNER GbR

(56) Entgegenhaltungen:
- EP-A- 0 288 756
- DE-A- 2 755 917
- DE-U- 8 812 423

## Beschreibung

Die Erfindung betrifft einen Eckverbinder für Tür- oder Fensterrahmen aus Hohlprofilen, mit einer auf Gehrung verlaufenden Schweißfläche und einem von dieser ausgehenden, dem Innenquerschnitt der zu verbindenden Hohlprofile angepaßten Schaft sowie einer in die Schweißfläche eintretenden, den Eckverbinder parallel zur Längsachse des Hohlprofils durchlaufenden Bohrung zur Aufnahme eines Spannbolzens.

Ein Eckverbinder dieser Art ist beispielsweise aus dem DE-U-87 16 578 bekannt. Bei diesem bekannten Eckverbinder weist der Schaft in dem der Schweißfläche gegenüberliegenden Endbereich einander kreuzende Schlitze auf, die sich bis in die axiale Bohrung hinein erstrecken. In die Bohrung wird ein Spreizkonus oder dergleichen eingesetzt, der mit Hilfe eines Bolzens gespannt werden kann. Beim Spreizen werden die einzelnen Segmente unter Verbreiterung der Schlitze auseinandergedrückt, so daß der Eckverbinder kraftschlüssig im Hohlprofil gehalten wird.

Ein aus dem DE-U-88 12 423 bekannter Eckverbinder weist in seinem von der Schweißfläche abgewandten Endbereich radiale Führungsschlitze auf, die beispielweise in die Ecken eines rechteckigen Hohlprofils gerichtet sind. In den Führungsschlitzen liegen Lamellen, die mit Hilfe eines im Eckverbinder angeordneten Spreizdübels nach außen gedrückt werden können und den Eckverbinder ebenfalls im Hohlprofil verspannen.

Lösungen dieser Art sind zwar einwandfrei funktionsfähig, wenn die Abmessungen des Innenquerschnitts des Hohlprofils und des Außenquerschnitts des Eckverbinders ausreichend genau aufeinander abgestimmt sind. Dies ist in der Praxis jedoch nicht immer der Fall. Insbesondere Hohlprofile aus Metall, die als Verstärkungsprofile in Kunststoff-Hohlprofile der Fenster- und Türrahmen eingeschoben werden und ihrerseits den Eckverbinder aufnehmen, können in ihren Abmessungen erheblich schwanken, da die Einhaltung genauerer Toleranzen zu einem vielfach nicht zu vertretenden Mehraufwand führen würde. Ist aber der Innenquerschnitt des Verstärkungsprofils in bezug auf den Außenquerschnitt des Eckverbinders zu weit, so läßt sich dieser zwar in der Regel in seinem von der Schweißfläche abgewandten Endbereich noch ausreichend im Verstärkungsprofil verspannen, während der der Schweißfläche zugewandte Teil des Schafts in Radialrichtung frei beweglich bleibt.

Diese verbleibende Beweglichkeit des Eckverbinders im Profil macht die Herstellung einer absolut festen Eckverbindung unmöglich.

Der Erfindung liegt daher die Aufgabe zugrunde, einen Eckverbinder der gattungsgemäßen Art zu schaffen, der auch bei größeren Abweichungen der Abmessungen des Innenquerschnitts des Hohlprofils und des Außenquerschnitts des Eckverbinders eine feste Verspannung über die gesamte Länge des Eckverbinders ermöglicht.

Diese Aufgabe wird erfindungsgemäß durch einen Eckverbinder gelöst, der dadurch gekennzeichnet ist, daß der Schaft auf einer Außenfläche in Richtung des von der Schweißfläche abgewandten Endes abgeschrägt ist, daß ein die Abschrägung ausfüllender, auf der Schrägfläche verschiebbar geführter Spannkeil vorgesehen ist, und daß die Bohrung derart angeordnet ist, daß sie die Schrägfläche durchläuft und in die entsprechende Führungsfläche des Spannkeils eintritt.

Der Spannkeil kann durch Andrehen des Spannbolzen über die Schrägfläche des Schafts in Richtung der Schweißfläche gezogen werden. Dadurch nimmt der Abstand zwischen den einander gegenüberliegenden Außenflächen des Schafts zu, ohne daß diese ihre Parallelität verlieren. Der Schaft wird daher über seine gesamte Länge gleichmäßig zwischen zwei gegenüberliegenden Innenflächen des Hohlprofils verspannt.

Der Spannkeil kann grundsätzlich auf jeder Außenfläche des Eckverbinders angeordnet sein. Gegebenenfalls ist zu berücksichtigen, daß als Verstärkungsprofile vielfach abgekantete Vierkant-Profile verwendet werden, die an der Nahtstelle nicht verschweißt sind. In diesen Fällen sollte der Spannkeil nicht so angeordnet werden, daß die Naht auseinandergedrückt wird, sondern vielmehr auf der der Naht gegenüberliegenden Seite.

Der Eckverbinder und der Spannkeil sind vorzugsweise Spritzgußteile aus Kunststoff. In dem Spannkeil befindet sich eine Gewindebohrung, in die das Ende des Spannbolzens eintritt. Diese Gewindebohrung liegt vorzugsweise in einem in den Spannkeil eingebetteten Verankerungsteil aus Metall.

Die Schrägfläche des Eckverbinders und die Führungsfläche des Spannkeils können korrespondierende Führungen aufweisen. Der Eckverbinder und der Spannkeil können gegebenenfalls auch unverlierbar miteinander verbunden sein.

Der Kopf des Spannbolzens liegt vorzugsweise versenkt in einem Bohrungs-Abschnitt größeren Durchmessers in dem Eckverbinder. Der Kopf kann sich an der auf diese Weise gebildeten Stufe über eine Druckfeder abstützen, die den Spannbolzen in Zugrichtung vorspannt.

Bei einer abgewandelten Ausführungsform ist in den Schaft vom Schaftende her eine Ausnehmung eingearbeitet, in die ein verschiebbarer Einsatz eingefügt ist. Die Ausnehmung schneidet die Schrägfläche, und der Einsatz ergänzt diese Schrägfläche mit einem Teil seiner Oberfläche. Der Einsatz nimmt ferner durch eine Bohrung in der Schweißfläche den Bolzen in einer entsprechenden Bohrung auf. Der Einsatz kann in der Ausnehmung durch ein Ratschenprofil in Axialrichtung festgelegt sein, das ein geringfügiges, stufenweises Nachgeben bei Überspannung ermöglicht.

Bei einer weiteren Ausführungsform der Erfindung, die insbesondere für Hohlprofile mit rauher Innenfläche geeignet ist, befindet sich auf der der Schrägfläche gegenüberliegenden Außenfläche des Spannkeils eine Gleitplatte, die in bezug auf den Spannkeil verschiebbar ist. Die Gleitplatte ermöglicht eine unbehinderte Axialverschiebung des Spannkeils während des Spannvorganges. Bei Hohlprofilen mit rauher Innenfläche besteht die Gefahr, daß sich der Spannkeil beim Spannen in Axialrichtung festsetzt, so daß an seiner Stelle der gesamte Eckverbinder in Axialrichtung gezogen wird und unkontrollierbare Quetsch- und Spannvorgänge entstehen.

Im folgenden werden bevorzugte Ausführungsbeispiele der Erfindung anhand der beigefügten Zeichnung näher erläutert.
- Fig. 1: ist eine teilweise aufgeschnittene Seitenansicht eines erfindungsgemäßen Eckverbinders;
- Fig. 2: ist eine Stirnansicht von rechts in Fig. 1;
- Fig. 3: ist eine teilweise aufgeschnittene Seitenansicht einer anderen Ausführungsform eines Eckverbinders;
- Fig. 4: zeigt eine Stirnansicht von rechts in Fig. 3;
- Fig. 5: ist eine schematische Seitenansicht einer weiteren Ausführungsform der Erfindung.

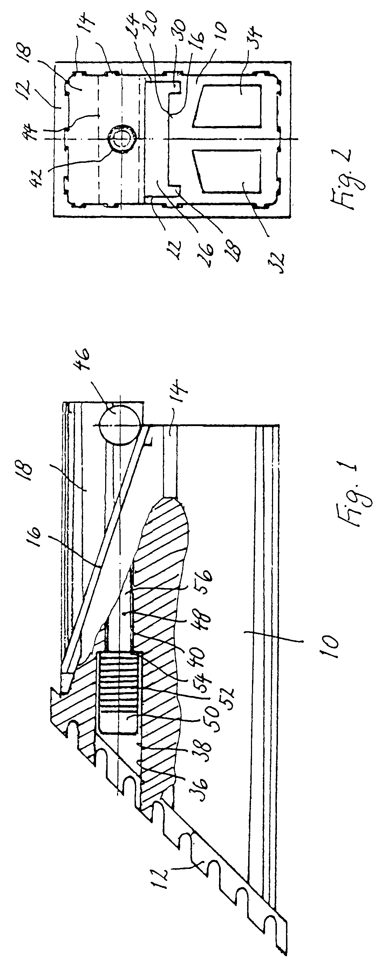

Fig. 1 und 2 zeigen eine erste Ausführungsform eines Eckverbinders, der einen im Querschnitt im wesentlichen rechteckigen Schaft 10 und eine um 45° gegen den Schaft geneigte, den Schaft am linken Ende in Fig. 1 abschließende Schweißfläche 12 umfaßt. Die Schweißfläche weist eine Profilierung auf, die das Schmelzen beim Schweißvorgang erleichtert und zur Verbesserung der Verbindung beiträgt. Ein Eckverbinder dieser Art wird beispielsweise in ein im Querschnitt rechteckiges Verstärkungsprofil aus Metall eingeschoben, das ebenfalls auf Gehrung geschnitten sein kann und seinerseits in ein auf Gehrung geschnittenes Kunststoffprofil einer Tür oder eines Fensters eingeschoben wird. Mit Hilfe eines Schweißschwertes werden der Eckverbinder und das Kunststoffprofil des Fensters in einem Schweißvorgang verschweißt. Einzelheiten dieser Art sind bekannt und sollen daher nicht näher erläutert werden. Die Schweißfläche 12 springt in Radialrichtung nach allen Seiten gegenüber dem Schaft 10 vor und bildet somit zugleich einen Anschlag beim Einschieben in ein nicht gezeigtes Verstärkungsprofil.

Der Schaft 10 weist im dargestellten Beispiel auf den Außenflächenlängsgerichtete Rippen 14 auf, die sich beim kraftschlüssigen Verspannen im Verstärkungsprofil geringfügig verformen lassen und somit dem Sitz im Verstärkungsrohr eine gewisse Elastizität verleihen.

Der Schaft 10 ist auf der in Fig. 1 und 2 oben liegenden, also der aufgrund der Gehrung kürzeren, rechteckigen Außenseite in Richtung des Schaftendes unter einem Winkel von beispielsweise 20° abgeschrägt. Die entsprechende Schrägfläche ist mit 16 bezeichnet. Der durch die Abschrägung entfallende Teil des Schaftes 10 wird ausgefüllt durch einen Spannkeil 18, der mit einer entsprechend der Schrägfläche 16 abgeschrägten Führungsfläche 20 verschiebbar auf der Schrägfläche geführt ist.

Zur sicheren Führung des Spannkeils 18 auf dem Schaft 10 können auf der Schrägfläche 16 und der Führungsfläche 20 Führungen vorgesehen sein, die beispielsweise seitlich aufragende Wände 22,24 umfassen, die ein in der Breite verringertes Unterteil 26 des Spannkeils 18 aufnehmen. Das Unterteil 26 kann seinerseits an beiden seitlichen Rändern nach unten vorspringende Stege 28,30 aufweisen, die in nicht bezeichnete Nuten in der Schrägfläche 16 eintreten. Die auf diese Weise gebildete Führungen können auch durch Hinterschneidungen oder dergleichen so ausgebildet sein, daß der Schaft 10 und der Spannkeil 18 verschiebbar, jedoch unverlierbar miteinander verbunden sind.

Wie Fig. 2 zeigt, weist der Schaft im Inneren Hohlräume 32,34 auf, die der Material- und Cewichtsersparnis dienen und durch die herstellungstechnisch ungünstige Materialanhäufungen vermieden werden.

In dem durch die Schrägfläche 16 begrenzten, in Fig. 1 oberen, pultförmig aufsteigenden Bereich des Schafts 10 tritt von der Schweißfläche 12 her eine achsparallele Bohrung 36 in den Schaft ein, die, ausgehend von der Schweißfläche 12, einen ersten Abschnitt 38 größeren Durchmessers und anschließend einen weiteren Abschnitt 40 kleineren Durchmessers umfaßt. Die Bohrung 36 ist so angeordnet, daß sie im Bereich der Schrägfläche 16 von dem Schaft 10 in den Spannkeil 18 übergeht und sich in diesem in einer mit 42 bezeichneten Bohrung fortsetzt.

Eine weitere Bohrung 44 verläuft im Bereich des Spannkeils 18 senkrecht zur Bohrung 42 und zur Zeichenebene in Fig. 1. Die Bohrung 44 nimmt einen Verankerungsstift 46 auf, der im Bereich der Überschneidung mit der Bohrung 42 mit einer mit dieser fluchtenden, nicht gezeigten Gewindebohrung versehen ist.

In der Bohrung 36 des Schafts liegt ein Spannbolzen 48, dessen Kopf 50 sich im Abschnitt 38 größeren Durchmessers befindet und auf diese Weise in bezug auf die Schweißfläche 12 versenkt ist. Der Kopf 50 stützt sich über eine Schraubenfeder 52 und eine Ringscheibe 54 an einer zwischen den Abschnitten 38 und 40 der Bohrung 36 gebildeten, nicht bezeichneten Schulter ab. Innerhalb des Abschnitts 40 geringeren Durchmessers liegt in der Bohrung 36 ein Bolzenschaft 56 des Spannbolzen 48, der an seinem äußeren Endbereich in nicht gezeigter Weise mit einem Außengewinde versehen ist. Dieses Außengewinde wird in das Innengewinde des Verankerungsstifts 46 in dem Spannkeil 18 eingeschraubt.

Der Abschnitt 40 der Bohrung 36 weist gegenüber dem Bolzenschaft 56 ein gewisses Übermaß auf, so daß der Bolzenschaft 56 beim Anziehen des Spannbolzens 48 der Verschiebebewegung des Spannkeils 18 und damit des Verankerungsstifts 46 mit der Gewindebohrung folgen kann.

Beim Anziehen des Spannbolzens 48 bleibt die Parallelität zwischen den oberen und unteren Oberflächen des Schaftes 10 und Spannkeils 18 erhalten, so daß der Schaft über die gesamt Länge des Spannkeils 18 im Hohlprofil gleichmäßig verspannt wird.

Wie bereits erwähnt, kann der Spannkeil auch auf einer anderen als der gezeigten Außenfläche des Schafts vorgesehen sein, und grundsätzlich besteht auch die Möglichkeit, mehr als einen Spannkeil auf verschiedenen Oberflächen vorzusehen, jedoch wird dies in der Regel zu aufwendig und nicht erforderlich sein.

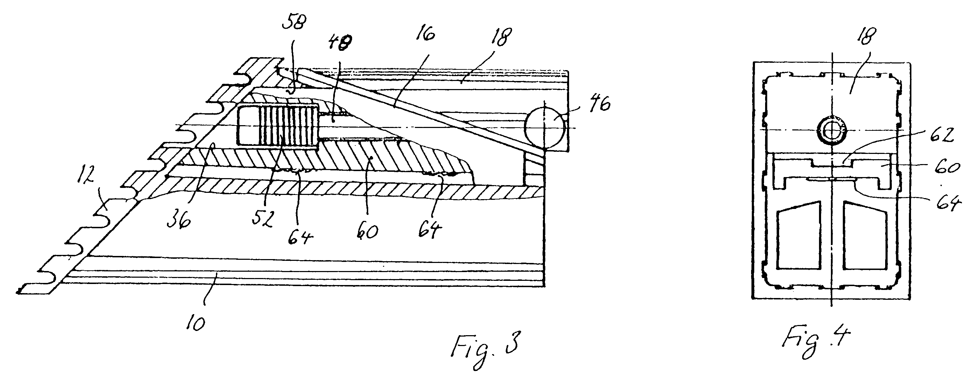

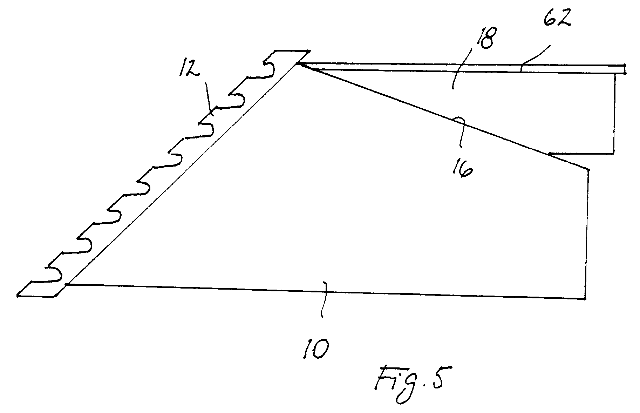

Fig. 3 und 4 zeigen eine abgewandelte Ausführungsform des Eckverbinders gemäß Fig. 1 und 2. Nach dem Verspannen eines Eckverbinders und der Fertigstellung eines Fenster- oder Türrahmens kann es gelegentlich durch Sonneneinstrahlung oder hohe Raumtemperaturen und die damit verbundene Wärmedehnung zu einer so starken Spannung zwischen dem Eckverbinder und dem Hohlprofil kommen, daß die Gefahr einer Beschädigung des Hohlprofils besteht. Die in Fig. 3 und 4 dargestellte Ausführungsform sieht für Fälle dieser Art eine Überlastsicherung vor, die ein begrenztes Nachgeben mit anschließender erneuter Verrastung ermöglicht.

Zu diesem Zweck tritt vom freien Ende her in den Schaft in der Umgebung der Bohrung 36 eine im Querschnitt beispielsweise rechteckige Ausnehmung 58 ein, die sich bis zur Rückseite der Schweißfläche 12 erstreckt. In diese Ausnehmung 58 ist ein Einsatz 60 entsprechender Form eingepaßt. Die Bohrung 36 erstreckt sich nur zu einem Teil durch die Schweißfläche 12 und setzt sich im übrigen in dem Einsatz 60 in der bereits beschriebenen Weise fort. Die Ausnehmung 58 ist so angeordnet, daß sie die Schrägfläche 16 des Schafts 10 schneidet, so daß die Schrägfläche zum Teil durch den Einsatz 60 gebildet wird.

Wie Fig. 4 zeigt, weist der Einsatz 60 die Geometrie des unteren Bereichs des Unterteils 26 des Spannkeils 18 auf, das im Zusammenhang mit Fig. 1 und 2 beschrieben worden ist. Bei der Ausführungsform gemäß Fig. 3 und 4 ist ein Unterteil 62 an dem Spannkeil 18 vorgesehen, das eine geringere Höhe besitzt und auf dem Einsatz 60 verschiebbar geführt ist. Der Einsatz 60 weist an seiner Unterseite gemäß Fig. 1 und 2 ein Ratschenprofil 64 auf, das in entsprechende, nicht gezeigte Rillen auf der gegenüberliegenden Oberfläche der Ausnehmung 58 eingreift. Da der Einsatz 60 verhältnismäßig eng in die Ausnehmung 58 eingepaßt ist und beim Spannen des Spannkeils 18 im übrigen Druck in Eingriffsrichtung des Ratschenprofils 64 auf den Einsatz 60 ausgeübt wird, ist der Einsatz 60 in der Ausnehmung 58 bei normaler Beanspruchung ausreichend festgelegt.

Im Falle einer überhöhten Belastung des gespannten Eckverbinders durch Kräfte, die von oben und unten in Fig. 3 auf den Schaft bzw. den Spannkeil 18 einwirken, weisen die von oben auf den Spannkeil 18 gerichteten Kräfte einen Kraftvektor auf, der bestrebt ist, den Spannkeil über die Führungen nach rechts in Fig. 3 zurückzuschieben. Dies führt zu einer nach rechts in Fig. 3 gerichteten Zugwirkung, die sich über den Spannbolzen 48 auf den Einsatz 60 überträgt. Überschreitet diese Zugwirkung ein vorgegebenes Maß, so kann das Ratschenprofil 64 um einen oder wenige Zähne nachgeben und bei Nachlassen der Belastung wieder einrasten. Die Schraubenfeder 52, die auch bei der Ausführungsform gemäß Fig. 1 vorgesehen ist, führt in jedem Falle zu einer ausreichenden Vorspannung des Spannbolzens und damit einer ausreichenden Festlegung des Spannkeils 18. Zur Erleichterung des Zurückziehens des Einsatzes 60 in den zuvor geschilderten Fällen kann dieser Einsatz an der unteren Oberfläche, ebenso wie die entsprechende obere Oberfläche der Ausnehmung 58, nach rechts in Fig. 3 geringfügig geneigt sein.

Fig. 5 zeigt schematisch eine Ausführungsform der Erfindung, die insbesondere geeignet ist für Hohlprofile oder Verstärkungs-Hohlprofile aus Metall, die eine unebene oder rauhe Innenfläche aufweisen, an denen sich beispielsweise Rückstände von zurückliegenden Schweiß- oder Verzinkungsarbeiten befinden. Da der Spannkeil 18 beim Spannvorgang eine kombinierte Radial- und Axialbewegung ausführt, ist es in der Endphase des Spannvorganges erforderlich, daß sich der Spannkeil geringfügig auf der Innenfläche des Hohlprofils verschieben kann. Ist dies wegen unreiner Innenfläche des Hohlprofils nicht möglich, so kann sich beispielsweise der gesamte Schaft 10 in das Hohlprofil 10 hineinziehen, und es kommt zu unkontrollierbaren Verspannungen und Verquetschungen.

Die in Fig. 5 gezeigte Ausführungsform umfaßt zusätzlich zu den bisher beschriebenen Teilen eine flache Gleitplatte 62, die gemäß Fig. 5 auf der Oberseite des entsprechend in der Höhe verringerten Spannkeils 18 liegt. Die Gleitplatte 62 stützt sich nach links in Fig. 5 an der Rückseite der Schweißfläche 12 ab, kann also beim Spannvorgang nicht zusammen mit dem Spannkeil 18 nach links gezogen werden. Die Gleitplatte 62 besteht zumindest auf ihrer unteren Oberfläche aus verhältnismäßig glattem Material mit geringem Reibungskoeffizienten, so daß sich der Spannkeil 18 leicht über diese untere Oberfläche verschieben kann.

Zur unverlierbaren Verbindung mit dem übrigen Eckverbinder kann die Gleitplatte 62 mit Hilfe geeigneter, nicht gezeigter Vorsprünge und Ausnehmungen mit dem Spannkeil 18 und/oder der Schweißfläche 12 unter Beibehaltung eines ausreichenden Bewegungsspielraums verrastet sein.

## Patentansprüche

1. Eckverbinder für Tür- oder Fensterrahmen aus Hohlprofilen, mit einer auf Gehrung verlaufenden Schweißfläche (12) und einem von dieser ausgehenden, dem Innenquerschnitt der zu verbindenden Hohlprofile angepaßten Schaft (10) sowie einer in die Schweißfläche (12) eintretenden, den Eckverbinder parallel zur Längsachse des Hohlprofils durchlaufenden Bohrung (36) zur Aufnahme eines Spannbolzens (48), dadurch **gekennzeichnet,** daß der Schaft (10) auf einer Außenfläche in Richtung des von der Schweißfläche (12) abgewandten Endes abgeschrägt ist, daß ein die Abschrägung ausfüllender, auf der Schrägfläche (16) verschiebbar geführter Spannkeil (18) vorgesehen ist, und daß die Bohrung (36) derart angeordnet ist, daß sie die Schrägfläche (16) durchläuft und in die entsprechende Führungsfläche (20) des Spannkeils eintritt.

2. Eckverbinder nach Anspruch 1, dadurch **gekennzeichnet,** daß ein Verankerungsstift (46) die Bohrung (36,42) im Bereich des Spannkeils (18) kreuzt und eine mit der Bohrung (36,42) fluchtende Innengewinde-Bohrung aufweist, in die der Spannbolzen (48) einschraubbar ist.

3. Eckverbinder nach Anspruch 1 oder 2, dadurch **gekennzeichnet,** daß die Schrägfläche (16) des Schafts (10) und die Führungsfläche (20) des Spannkeils (18) korrespondierende Führungen (22,24,26,28,30) aufweisen.

4. Eckverbinder nach einem der Ansprüche 1 bis 3, dadurch **gekennzeichnet,** daß die Bohrung (36), ausgehend von der Schweißfläche (12) einen Abschnitt (38) größeren Durchmessers zur Aufnahme eines Kopfes (50) des Spannbolzens (48) und anschließend einen Abschnitt (40) geringeren Durchmessers umfaßt.

5. Eckverbinder nach Anspruch 4, dadurch **gekennzeichnet,** daß zwischen dem Kopf (50) des Spannbolzens (48) und einer zwischen den Abschnitten (38) und (40) der Bohrung (36) gebildeten Stufe eine Druck-Schraubenfeder (52) angeordnet ist.

6. Eckverbinder nach einem der vorhergehenden Ansprüche, dadurch **gekennzeichnet,** daß der Schaft (10) eine vom Ende her eintretende Ausneh- mung (58) in der Umgebung der Bohrung (36) aufweist, in die ein Einsatz (60) entsprechender Abmessungen eingefügt ist, daß die Ausnehmung (58) die Schrägfläche (16) schneidet und daß im Bereich der Schnittebene die Schrägfläche (16) auf dem Einsatz (60) so ausgebildet ist, daß die Bohrung (36) den Einsatz (60) durchläuft, und daß der Einsatz (60) über ein Ratschenprofil (64) in bezug auf die innere Wand der Ausnehmung (58) in Axialrichtung festgelegt ist.

7. Eckverbinder nach einem der vorhergehenden Ansprüche, dadurch **gekennzeichnet,** daß auf der der Schrägfläche (16) gegenüberliegenden Außenfläche des Spannkeils (18) eine gegenüber dem Spannkeil (18) verschiebbare Gleitplatte (62) angeordnet ist

8. Eckverbinder nach Anspruch 7, dadurch **gekennzeichnet,** daß die Gleitplatte (62) mit Hilfe von Rasteinrichtungen mit dem Spannkeil (18) und/oder der Schweißfläche (12) des Eckverbinders verrastet ist.

## Claims

1. Corner connector for door or window frames made of hollow profiled sections, with a mitred weld surface (12) and a shank (10) which extends therefrom and fits the internal cross-sections of the hollow sections to be connected, as well as a drill-hole (36) which opens into the weld surface (12) and extends through the corner connector parallel to the longitudinal axis of the hollow profiled section to house a tension bolt (48), characterised in that an outer surface (16) of the shank (10) is inclined towards its end which faces away from the weld surface (12), in that a clamping wedge (18), which conforms to the inclined portion, is guided for movement on the inclined surface (16), and in that the drill-hole (36) is disposed in a manner such that it extends through the inclined surface (16) and through the corresponding guide surface (20) of the clamping wedge.

2. Corner connector according to Claim 1, characterised in that an anchoring pin (46) extends transversely through the drill-hole (36, 42) in the region of the clamping wedge (18) and has an inner threaded drill-hole which is aligned with the drill-hole (36, 42) and into which the tension bolt (48) can be screwed.

3. Corner connector according to Claim 1 or Claim 2, characterised in that the inclined surface (16) of the shank (10) and the guide surface (20) of the clamping wedge (18) have corresponding guides (22, 24, 26, 28, 30).

4. Corner connector according to any one of Claims 1 to 3, characterised in that, starting from the weld surface (12), the drill-hole (36) includes a larger-diameter portion (38) for housing the head (50) of a tension bolt (48), followed by a smaller-diameter portion (40).

5. Corner connector according to Claim 4, characterised in that a helical compression spring (52) is disposed between the head (50) of the tension bolt (48) and a shoulder formed between the portions (38) and (40) of the drill hole (36).

6. Corner connector according to any one of the preceding claims, characterised in that, in the vicinity of the drill-hole (36), the shank (10) has a recess (58) which extends inwardly from its end and in which an insert (60) of corresponding dimensions is fitted, in that the recess (58) intersects the inclined surface (16), and in that, in the region of the plane of intersection, the inclined surface (16) is formed on the insert (60) in a manner such that the drill-hole (36) extends through the insert (60), and such that the insert (60) is fixed axially relative to the inner wall of the recess (58) by means of a ratchet profile (64).

7. Corner connector according to any one of the preceding claims, characterised in that a sliding plate (62) is disposed on the outer surface of the clamping wedge (18) opposite the inclined surface (16) and is movable relative to the clamping wedge (18).

8. Corner connector according to Claim 7, characterised in that the sliding plate (62) is locked to the clamping wedge (18) and/or to the weld surface (12) of the corner connector with the aid of locking devices.

## Revendications

1. Raccord d'angle pour châssis de porte ou de fenêtre en profilés creux, comprenant une surface de soudage (12) en onglet et une tige (10) qui part de ladite surface de soudage et est adaptée à la section transversale intérieure des profilés creux à assembler, ainsi qu'un alésage (36) pour la réception d'un boulon de serrage (48), qui pénètre dans la surface de soudage (12) et traverse le raccord d'angle parallèlement à l'axe longitudinal du profilé creux, caractérisé en ce que la tige (10) est chanfreinée sur une surface extérieure en direction de l'extrémité opposée à la surface de soudage (12), qu'il est prévu un coin de serrage (18) lequel remplit le chanfrein et peut être déplacé sur la surface inclinée (16), et que l'alésage (36) est disposé de telle façon qu'il traverse la surface inclinée (16) et pénètre dans la surface de guidage (20) correspondante du coin de serrage.

2. Raccord d'angle selon la revendication 1, caractérisé en ce qu'une broche d'ancrage (46) croise l'alésage (36, 42) dans la région du coin de serrage (18) et présente un taraudage aligné avec l'alésage (36, 42) dans lequel peut être vissé le boulon de serrage (48).

3. Raccord d'angle selon l'une des revendications 1 ou 2, caractérisé en ce que la surface inclinée (16) de la tige (10) et la surface de guidage (20) du coin de serrage (18) présentent des guidages conjugués (22, 24, 26, 28, 30).

4. Raccord d'angle selon l'une des revendications 1 à 3, caractérisé en ce que, en partant de la surface de soudage (12), l'alésage (36) comprend une section (38) d'un diamètre plus grand pour la réception d'une tête (50) du boulon de serrage (48), suivie d'une section (40) d'un diamètre plus faible.

5. Raccord d'angle selon la revendication 4, caractérisé en ce qu'entre la tête (50) du boulon de serrage (48) et un gradin formé entre les sections (38) et (40) de l'alésage (36) est disposé un ressort cylindrique de compression (52).

6. Raccord d'angle selon l'une des revendications précédentes, caractérisé en ce que la tige (10) présente dans la région de l'alésage (36) un évidement (58) qui pénètre à partir de l'extrémité et dans lequel est engagé un insert (60) de dimensions adéquates, que l'évidement (58) coupe la surface inclinée (16), et que dans la région du plan de coupe, la surface inclinée (16) sur l'insert (60) est conformée de telle façon que l'alésage (36) traverse l'insert (60) et que l'insert (60) est bloqué axialement par rapport à la paroi intérieure de l'évidement (58) par l'intermédiaire d'un profil à cliquet (64).

7. Raccord d'angle selon l'une des revendications précédentes, caractérisé en ce que sur la surface extérieure du coin de serrage (18) opposée à la surface inclinée (16) est disposée une plaque de glissement (62) déplaçable par rapport au coin de serrage (18).

8. Raccord d'angle selon la revendication 7, caractérisé en ce que la plaque de glissement (62) est verrouillée avec le coin de serrage (18) et/ou la surface de soudage (12) du raccord d'angle à l'aide de dispositifs à crans.
